# EUROPÄISCHE PATENTSCHRIFT

(11) **EP 1 163 850 B1**
(45) Veröffentlichungstag und Bekanntmachung des Hinweises auf die Patenterteilung: **07.04.2004**
(21) Anmeldenummer: 00112643.2
(22) Anmeldetag: 15.06.2000
(51) Int. Cl.: A23B 4/28, A22C 17/00

(54) **Nadelregister für Pökelmaschinen**
Needle system for brine injection machines
Système d'aiguilles pour machines de salage

(43) Veröffentlichungstag der Anmeldung: 19.12.2001
(73) Patentinhaber: Schröder Maschinenbau KG, 33824 Werther (DE)
(72) Erfinder: Thomas, Manfred, 33775 Versmold (DE)
(74) Vertreter: TER MEER STEINMEISTER & PARTNER GbR

(56) Entgegenhaltungen:
- EP-A- 0 297 592
- EP-A- 0 396 847
- WO-A-80/01131
- DE-A- 19 827 685
- DE-B- 1 074 379
- US-A- 2 528 204
- US-A- 4 455 928

## Beschreibung

Die Erfindung betrifft ein Nadelregister für Pökelmaschinen, mit einer oder mehreren aus einer Druckkammer mit Lake gespeisten Nadeln und den einzelnen Nadeln zugeordneten Ventilen zur Steuerung des Lakeflusses.

Aus DE 198 27 685 C2 ist ein Nadelregister dieser Art bekannt, bei dem die Nadeln mit ihren offenen oberen Enden in der Druckkammer münden und jeweils einen Ventilsitz für eine zugehörige Ventilnadel bilden, die vertikal durch die Druckkammer verläuft und dicht und verschiebbar durch einen Deckel der Druckkammer hindurch geführt ist, so daß sie von außerhalb der Druckkammer betätigt werden kann. Das Öffnen und Schließen der Ventile wird, wie es bei Pökelmaschinen üblich ist, durch die Relativbewegung zwischen dem Nadelregister und einem Niederhalter gesteuert, der sich beim Absenken des Nadelregisters und der Nadeln auf dem Pökelgut abstützt, während die Nadeln in das Pökelgut eindringen. Mit der bekannten Konstruktion wird bereits eine hohe Funktionszuverlässigkeit und eine hohe Reinigungsfreundlichkeit beziehungsweise eine geringe Verschmutzungsanfälligkeit der Ventile erreicht.

Aufgabe der Erfindung ist es, den Aufbau der Ventile bei hoher Funktionszuverlässigkeit zu vereinfachen und die Verschmutzungsanfälligkeit weiter zu verringern.

Diese Aufgabe wird erfindungsgemäß dadurch gelöst, daß jede Nadel über ein Schlauchstück mit der Druckkammer verbunden ist und daß die Ventile durch Abquetschmechanismen für die Schlauchstücke gebildet werden.

Erfindungsgemäß erfolgt das Schließen der Ventile durch Abquetschen der Schlauchstücke. Anders als bei der herkömmlichen Ventilkonstruktion kommt es dabei nicht auf eine genaue Passung zwischen Ventilnadel und Ventilsitz an, so daß die hohe Funktionszuverlässigkeit mit einem vereinfachten Aufbau und geringeren Herstellungskosten erreicht werden kann. Das flexible Material der Schlauchstücke gewährleistet im abgequetschten Zustand ein sicheres Schließen des Ventils, so daß Verschmutzungen und herstellungsbedingte Maßtoleranzen in weit höherem Ausmaß toleriert werden können als bei der herkömmlichen Konstruktion.

Darüber hinaus ermöglichen die flexiblen Schlauchstücke eine größere konstruktive Freiheit bei der Anordnung und Ausgestaltung der Ventilmechanik.

Vorteilhafte Ausgestaltungen der Erfindung ergeben sich aus den Unteransprüchen.

Die flexiblen Schlauchstücke bestehen bevorzugt aus einem gummielastischen Material, beispielsweise aus Silikongummi, das durch die Pökellake nicht chemisch angegriffen wird. In diesem Fall können die Schlauchstücke aufgrund ihrer Eigenelastizität zugleich die Funktion von Rückstellfedern für die Abquetschmechanismen erfüllen, so daß eine weitere konstruktive Vereinfachung erreicht wird.

Die Schlauchstücke können einfach als kurze Stutzen ausgebildet sein, die auf die oberen Enden der Pökelnadeln aufgesteckt werden, die innerhalb der Druckkammer münden.

Der Abquetschmechanismus wird bevorzugt durch ein quer zum Schlauchstück bewegliches Druckglied und ein Widerlager gebildet, das fest in bezug auf die Nadel auf der dem Druckglied gegenüberliegenden Seite des Schlauchstückes angeordnet ist. Das Widerlager kann dabei im unteren Bereich als Buchse ausgebildet sein, in der das obere Ende der Nadel und das aufgesteckte Schlauchstück fixiert sind.

Im Prinzip kann für jede Nadel ein gesonderter Betätigungsmechanismus vorgesehen sein, so daß die Nadeln einzeln steuerbar sind. In einer bevorzugten Ausführungsform sind die Nadeln jedoch zu einer oder mehreren Gruppen zusammengefaßt, deren Druckglieder durch einen gemeinsamen Betätigungsmechanismus gesteuert werden. Der Betätigungsmechanismus kann in diesem Fall durch einen dicht durch die Wand der Druckkammer geführten Stößel gebildet werden. Diese Konstruktion hat den Vorteil, daß in der Druckkammer für jede Nadelgruppe nur eine einzige druckdichte Durchführung für den Stößel gebildet werden muß. Die Druckglieder für sämtliche Nadeln der Gruppe können dann durch ein gitterförmiges Gatter gebildet werden, dessen Gitteröffnungen an die Anordnung der Nadeln angepaßt sind. Wenn die Druckkammer einen lösbaren Deckel aufweist, kann das Gatter einfach nach Lösen des Deckels in die Druckkammer eingelegt werden.

Bei Nadelregistern mit relativ großer Arbeitsbreite kann es vorkommen, daß beim Pökeln von kleineren Pökelgut-Stücken nur ein Teil der Nadeln benötigt wird. In diesem Fall ist es möglich, das durch den Stößel betätigte Gatter durch ein kleineres Gatter zu ersetzen und die nicht benötigten Nadeln durch gesonderte, unbeweglich in der Druckkammer gehaltene Gatter dauerhaft zu verschließen.

Für die Betätigung des Stößels kommen alle im Stand der Technik bekannten Betätigungsmechanismen in Betracht, beispielsweise Nocken- oder Kipphebelsteuerungen oder auch pneumatische, hydraulische oder elektrische Steuerungen.

Im folgenden wird ein Ausführungsbeispiel der Erfindung anhand der Zeichnungen näher erläutert.

Es zeigen:
- Fig. 1: einen Schnitt durch ein Nadelregister;
- Fig.2: einen Schnitt durch das Nadelregister längs der Linie II-II in Fig. 1; und
- Fig. 3: einen Teilschnitt durch das Nadelregister gemäß Fig. 1 mit geschlossenen Ventilen.

Das in Fig, 1 gezeigte Nadelregister weist einen Grundkörper 10 auf, der in bekannter Weise mit Hilfe eines nicht gezeigten Antriebs auf- und abbewegbar in einer Pökelmaschine gehalten ist. Mehrere hohle Nadeln 12 sind lösbar in dem Grundkörper 10 gehalten und erstrecken sich von dem Grundkörper 10 aus parallel zueinander nach unten, so daß sie in das nicht gezeigte Pökelgut einstechen, wenn das Nadelregister abgesenkt wird. In der Oberseite des Grundkörpers 10 ist eine flache Ausnehmung 14 ausgebildet, die zusammen mit einem lösbar und fluiddicht auf dem Grundkörper befestigten Deckel 16 eine Druckkammer 18 bildet. Der Deckel 16 weist einen Zulauf 20 auf, über den Pökellake mit einer nicht gezeigten Pumpe in die Druckkammer 18 gefördert wird.

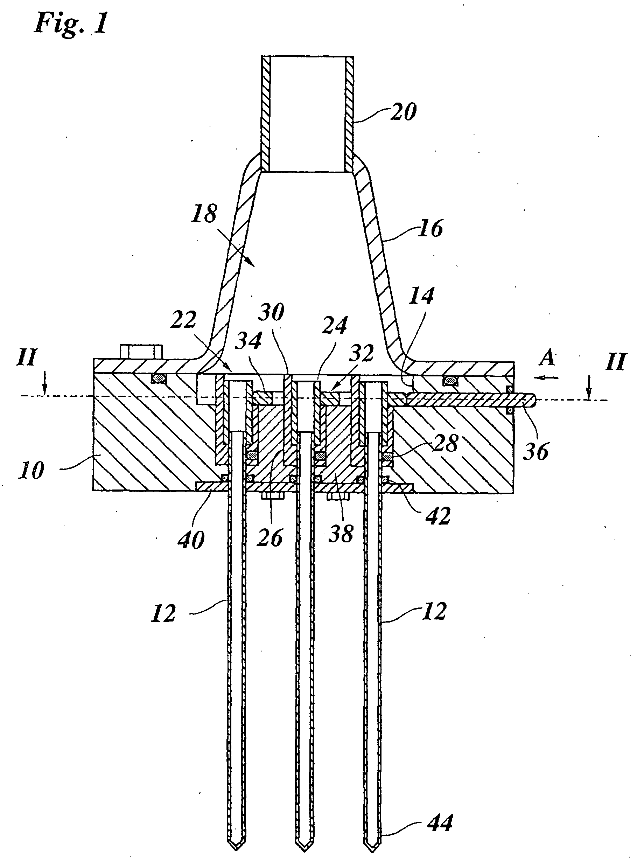

Jede Nadel 12 weist am oberen Ende innerhalb der Druckkammer 18 ein Ventil 22 auf. In dem in Fig. 1 gezeigten Zustand sind die Ventile 22 geöffnet, so daß die Nadeln mit der Druckkammer 18 in Fluidverbindung stehen.

Jedes Ventil 22 weist ein kurzes Schlauchstück 24 aus Silikongummi auf, das auf das obere Ende der betreffenden Nadel aufgesteckt ist. Dieses Schlauchstück 24 sowie das obere Ende der Nadel sind von einer Buchse 26 umgeben, die mit einer Madenschraube 28 an der Nadel 12 fixiert ist und die am oberen Ende ein auf einer Seite an dem Schlauchstück 24 anliegendes Widerlager 30 bildet.

Ein flaches, gitterförmiges Gatter 32 liegt lose auf dem Boden der Ausnehmung 14 auf, und die Schlauchstücke 24 und die Widerlager 30 für die mittlere und die rechte Nadel in Fig. 1 sind jeweils in einer Gitteröffnung des Gatters 32 aufgenommen. Die Gitterstege des Gatters 32 bilden Druckglieder 34, die auf der dem Widerlager 30 entgegengesetzten Seite am Schlauchstück 24 anliegen. Das Gatter 32 ist auf dem Boden der Ausnehmung 14 quer zu den Nadeln 12 beweglich und wird durch einen Stößel 36 betätigt, der verschiebbar und fluiddicht im Grundkörper 10 geführt ist und nach rechts in Fig. 1 aus dem Grundkörper 10 herausragt.

Die Buchsen 26 und die Nadeln 12 sind in dem Grundkörper 10 durch einen Fixierblock 38 und eine Abschlußplatte 40 gehalten. Die Durchführungen der Nadeln 12 durch die Abschlußplatte 40 sind mit Dichtungen 42 abgedichtet.

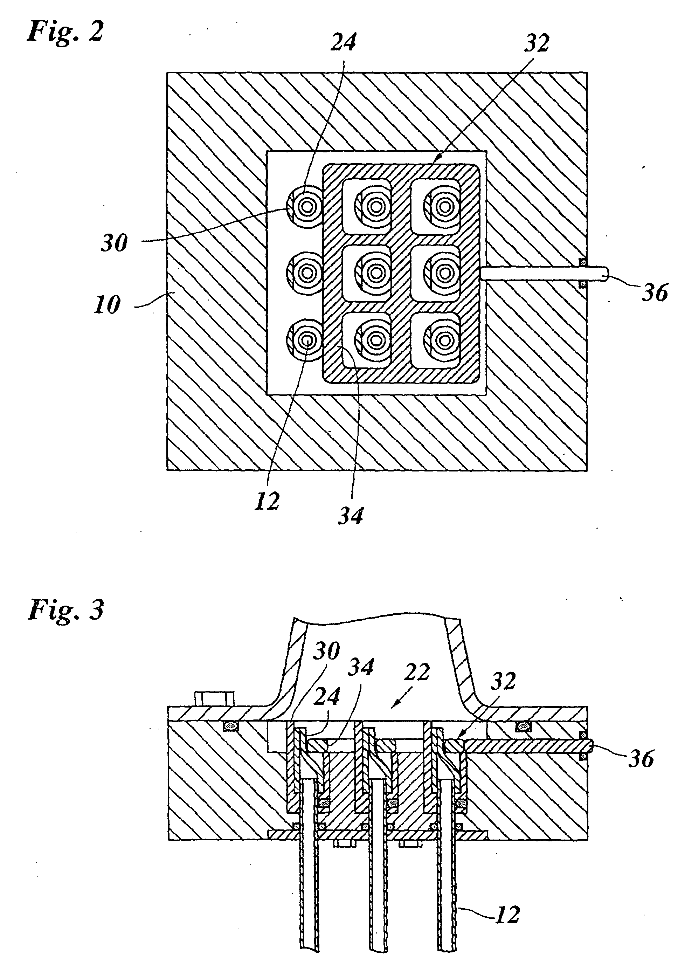

Wie in Fig. 2 zu erkennen ist, sind die Nadeln 12 in mehreren Zeilen und Spalten in einem rechteckigen Raster angeordnet. In der Praxis kann die Breite des Nadelregisters und die Anzahl der Nadeln bedeutend größer sein als im gezeigten Beispiel. Fig. 2 läßt außerdem die Gitterform des Gatters 32 und die Anordnung des Gatters in bezug auf die Widerlager 30 und die Schlauchstücke 24 erkennen.

Wenn das Nadelregister abgesenkt ist und die Nadeln 12 in das Pökelgut einstechen, so sind die Ventile 22 offen, wie in Fig. 1 gezeigt ist. Die unter Druck stehende Pökellake wird daher aus der Druckkammer 18 über Öffnungen 44 an den unteren Enden der Nadeln 12 in das Pökelgut injiziert.

Wenn sich das Nadelregister wieder anhebt und die Nadeln 12 aus dem Pökelgut herausgezogen werden, so wird durch einen nicht gezeigten Betätigungsmechanismus der Stößel 36 in Richtung des Pfeils A in Fig. 1 beaufschlagt, so daß das Gatter 32 entgegen der elastischen Rückstellkraft der Schlauchstücke 24 in die in Fig. 3 gezeigte Position verschoben wird. In dieser Position wird jedes Schlauchstück 24 zwischen dem zugehörigen Widerlager 30 und dem betreffenden Druckglied 34 abgequetscht. Die Druckglieder 34 und die Widerlager 30 bilden somit zusammen einen Abquetschmechanismus zum Abquetschen der Schlauchstücke 24 und damit zum Schließen der Ventile.

Wenn sich das Nadelregister im nächsten Zyklus wieder absenkt, so wird der Stößel 36 durch den Betätigungsmechanismus freigegeben, und das Gatter 32 kehrt aufgrund der elastischen Rückstellkraft der Schlauchstücke 24 wieder in die in Fig. 1 gezeigte Position zurück, so daß erneut Pökellake injiziert wird.

## Patentansprüche

1. Nadelregister für Pökelmaschinen, mit einer oder mehreren aus einer Druckkammer (18) mit Lake gespeisten Nadeln (12) und den einzelnen Nadeln zugeordneten Ventilen (22) zur Steuerung des Lakeflusses, **dadurch gekennzeichnet, daß** jede Nadel (12) über ein Schlauchstück (24) mit der Druckkammer (18) verbunden ist und daß die Ventile (22) durch Abquetschmechanismen (30, 34) für die Schlauchstücke (24) gebildet werden.

2. Nadelregister nach Anspruch 1, **dadurch gekennzeichnet, daß** die Schlauchstücke (24) aus gummielastischem Material bestehen und Rückstellfedern für die Abquetschmechanismen (30, 34) bilden.

3. Nadelregister nach Anspruch 1 oder 2, **dadurch gekennzeichnet, daß** die Schlauchstücke (32) innerhalb der Druckkammer (18) auf die offenen Enden der Nadeln (12) aufgesteckt sind.

4. Nadelregister nach einem der vorstehenden Ansprüche, **dadurch gekennzeichnet, daß** jeder Abquetschmechanismus durch ein quer zu der Nadel (12) und dem Schlauchstück (24) bewegliches Druckglied (34) und ein auf der dem Druckglied entgegengesetzten Seite am Schlauchstück (24) anliegendes Widerlager (30) gebildet wird.

5. Nadelregister nach Anspruch 4, **dadurch gekennzeichnet, daß** das Widerlager (30) an einer Buchse (26) ausgebildet ist, die auf der Nadel (12) befestigt ist und das mit dem Schlauchstück (24) verbundene Ende der Nadel umgibt.

6. Nadelregister nach Anspruch 4 oder 5, **dadurch gekennzeichnet, daß** die Druckglieder (34) einzeln oder gruppenweise durch einen Stößel (36) betätigbar sind, der sich verschiebbar und flüssigkeitsdicht durch eine Wand der Druckkammer (18) erstreckt.

7. Nadelregister nach Anspruch 6, **dadurch gekennzeichnet, daß** die Druckglieder (34) für eine Gruppe von Nadeln (12) durch ein gitterförmiges Gatter (32) gebildet werden, das durch den Stößel (36) verschiebbar ist.

8. Nadelregister nach Anspruch 7, **dadurch gekennzeichnet, daß** das Gatter (32) auf einem flachen Boden der Druckkammer (18) aufliegt.

9. Nadelregister nach Anspruch 7 oder 8, **dadurch gekennzeichnet, daß** die Druckkammer (18) durch einen lösbaren Deckel (16) verschlossen ist und daß das Gatter (32) und die Enden der Schlauchstücke (24) und der Nadeln (12) nach Entfernen des Deckels (16) frei zugänglich sind.

## Claims

1. Needle register for pickling machines, comprising one or more needles (12) that are fed with brine from a pressure chamber (18). and valves (22) associated with the individual needles for controlling the flow of brine **characterised in that** each needle (12) is connected to the pressure chamber (18) via a piece of flexible tubing (24), and the valves are formed by squeezing-off mechanisms (30. 34) for the pieces of flexible tubing (24).

2. Needle register in accordance with claim 1, **characterised in that** the pieces of flexible tubing (24) are comprised of a rubber elastic material and form return springs for the squeezing-off mechanisms (30, 34).

3. Needle register in accordance with claim 1 or 2, **characterised in that** the pieces of flexible tubing (34) are placed on the open ends of the needles (12) within the pressure chamber (18).

4. Needle register in accordance with one of the preceding claims, **characterised in that** each squeezing-off mechanism is formed by a compression element (34) that is moveable transversely to the needle (12) and the piece of flexible tubing (24), and an abutment (30) that is positioned on a side of the piece of flexible tubing (24) that lies opposite to the compression element.

5. Needle register in accordance with claim 4, **characterised in that** the the abutment (30) is formed at a bushing (26) mounted on the needle and enclosing the end of the needle that is connected to the piece of flexible tubing (24).

6. Needle register in accordance with claim 4 or 5, **characterised in that** the compression elements (34) are arranged to be actuated individually or goup-wise by a tappet (36) extending displaceably and liquid-tightly through a wall of the pressure chamber (18).

7. Needle register in accordance with claim 6, **characterised in that** the compression elements (34) for a group of needles (12) are formed by a latticed gate (32) that can be moved with the tappet (36).

8. Needle register in accordance with claim 7, **characterised in that** the gate (32) rests on a flat base of the pressure chamber (18).

9. Needle register in accordance with claim 7 or 8, **characterised in that** the pressure chamber (18) is closed by a removable cover (16), and the gate (32), the ends of the piecees of flexible tubing (24), and the needles (12) are openly accessible after the cover (16) has been removed.

## Revendications

1. Système d'aiguilles pour machines de salage, avec une ou plusieurs aiguilles (12), alimentées en saumure à partir d'une chambre de compression (18) et des clapets (22), affectés aux diverses aiguilles pour la commande du flux de saumure, **caractérisé en ce que** chaque aiguille (12) est reliée par l'intermédiaire d'un élément de tuyau flexible (24) avec la chambre de compression (18) et que les clapets (22) sont constitués par des mécanismes d'écrasement (30, 34) pour les éléments de tuyau flexible (24).

2. Système d'aiguilles selon la revendication 1, **caractérisé en ce que** les éléments de tuyau flexible (24) se composent d'un matériau ayant l'élasticité du caoutchouc et constituent des ressorts de rappel pour les mécanismes d'écrasement (30, 34).

3. Système d'aiguilles selon la revendication 1 ou 2, **caractérisé en ce que** les éléments de tuyau flexible (32), présents à l'intérieur de la chambre de compression (18), sont fixés sur les extrémités ouvertes des aiguilles (12).

4. Système d'aiguilles selon l'une des revendications précédentes, **caractérisé en ce que** chaque mécanisme d'écrasement est constitué par un élément de compression (34), mobile transversalement par rapport à l'aiguille (12) et à l'élément de tuyau flexible (24) et une butée (30), en appui sur l'élément de tuyau flexible (24), sur le côté opposé à l'élément de compression.

5. Système d'aiguilles selon la revendication 4, **caractérisé en ce que** la butée (30) est formée sur une douille (26), qui est fixée sur l'aiguille (12) et entoure l'extrémité de l'aiguille, reliée à l'élément de tuyau flexible (24).

6. Système d'aiguilles selon la revendication 4 ou 5, **caractérisé en ce que** les éléments de compression (34) peuvent être actionnés individuellement ou par groupe par une tige-poussoir (36), qui s'étend de manière coulissante et étanche aux liquides à travers une paroi de la chambre de compression (18).

7. Système d'aiguilles selon la revendication 6, **caractérisé en ce que** les éléments de compression (34) pour un groupe d'aiguilles (12) sont formés par une grille en treillis (32), qui peut être déplacé par la tige-poussoir (36).

8. Système d'aiguilles selon la revendication 7, **caractérisé en ce que** la grille (32) s'appuie sur un fond plat de la chambre de compression (18).

9. Système d'aiguilles selon la revendication 7 ou 8, **caractérisé en ce que** la chambre de compression (18) est fermée par un couvercle détachable (16) et que la grille (32) et les extrémités des éléments de tuyaux flexibles (24) et des aiguilles (12) sont librement accessibles après enlèvement du couvercle (16).
